# EUROPEAN PATENT APPLICATION

(11) **EP 4 742 275 A1**
(43) Date of publication of application: **13.05.2026**
(21) Application number: 23944435.9
(22) Date of filing: 12.10.2023
(51) Int. Cl.: H01B 1/06, C01B 25/14, H01B 1/10, H01M 4/139, H01M 4/62

(54) **SULFIDE SOLID ELECTROLYTE POWDER AND ELECTRODE MIXTURE**

(30) Priority: 05.07.2023 JP 2023110732
(71) Applicant: AGC INC., Chiyoda-ku, Tokyo 1008405 (JP)
(72) Inventor: FUJII, Naoki, Tokyo 100-8405 (JP); KUNISA, Yasuhiro, Tokyo 100-8405 (JP)
(74) Representative: Müller-Boré & Partner Patentanwälte PartG mbB
(86) International application number: PCT/JP2023/037116
(87) International publication number: WO 2025/009188

(57) **Abstract**

The present invention relates to a sulfide solid electrolyte powder that has a crystal phase, wherein a value that is expressed by [(strain value -0.001)/specific surface area (m²/ g)] × 100 is 0.010-0.070, and the crystal phase has an argyrodite crystal structure.

## Description

### TECHNICAL FIELD

The present invention relates to a sulfide solid electrolyte powder and an electrode mixture containing the same.

### BACKGROUND ART

Lithium ion secondary batteries are widely used in portable electronic devices such as a mobile phone and a notebook computer.

In the related art, a liquid electrolyte has been used in a lithium ion secondary battery, but a lithium ion all-solid-state battery (hereinafter, also referred to as a solid battery) in which a solid electrolyte is used as an electrolyte of the lithium ion secondary battery has attracted attention from the viewpoint that improvement of safety and high-speed charging and discharging can be expected.

The solid electrolytes are roughly classified into a sulfide solid electrolyte and an oxide solid electrolyte. Among them, the sulfide solid electrolyte exhibits high ion conductivity since the sulfide solid electrolyte contains sulfide ions having high polarizability.

As the sulfide solid electrolyte, there has been known LGPS crystals such as Li₁₀GeP₂S₁₂, argyrodite crystals such as Li₆PS₅Cl, LPS crystallized glasses such as a Li₇P₃S₁₁ crystallized glass, and the like.

When producing an all-solid-state battery such as a lithium ion battery using the sulfide solid electrolyte as described above, it is necessary to use a high restraining pressure in order to maintain interface contact between a positive electrode active material or a negative electrode active material and the solid electrolyte during charging and discharging. This is to prevent deterioration of the interface contact due to a volume change caused by expansion and contraction of the positive electrode active material or the negative electrode active material accompanying the charging and discharging of the all-solid-state battery.

### CITATION LIST

### PATENT LITERATURE

Patent Literature 1: WO2021/085239

### SUMMARY OF INVENTION

### TECHNICAL PROBLEM

In order to realize such a high restraining pressure, it is necessary to use a large restraining jig. In addition, even when an all-solid-state battery is obtained at a high restraining pressure, as a charging and discharging cycle is repeated, good interface contact cannot be maintained due to the volume change, and a battery capacity decreases.

Therefore, an object of the present invention is to provide a sulfide solid electrolyte powder capable of maintaining good interface contact with an active material even at a low restraining pressure when formed into an all-solid-state battery, and an electrode mixture containing the same.

### SOLUTION TO PROBLEM

Patent Literature 1 discloses a solid electrolyte including a crystal phase having an argyrodite crystal structure, and discloses that a lattice strain of a compound having the crystal phase is less than 0.10% and that lithium ion conductivity is improved as the lattice strain is smaller.

With respect to this, as a result of intensive studies, the present inventors have found that the above problems can be solved by imparting a certain strain to a crystal phase constituting a sulfide solid electrolyte powder and having a certain relationship with a specific surface area, and have completed the present invention.

That is, the present invention relates to the following.
[1] A sulfide solid electrolyte powder including a crystal phase,
   in which a value represented by [(strain value - 0.001)/specific surface area (m²/g)] × 100 is 0.010 to 0.070, and
   the crystal phase includes an argyrodite crystal structure.
[2] The sulfide solid electrolyte powder according to [1], further including an amorphous phase,
   in which a content ratio of the amorphous phase is 5 mass% or more.
[3] The sulfide solid electrolyte powder according to [1] or [2],
   in which the argyrodite crystal structure includes two or more kinds of halogen elements as constituent elements.
[4] The sulfide solid electrolyte powder according to [3],
   in which the halogen elements include Br, and
   a content ratio of Br to the halogen elements is 0.1 to 0.9.
[5] The sulfide solid electrolyte powder according to any one of [1] to [4],
   in which the argyrodite crystal structure is represented by a composition formula LiₐMZ_{b}Ha_{c},
   in the composition formula, M is at least one element selected from Na, K, and elements present as a divalent to quinquevalent cation in the crystal structure, Z is at least one element selected from elements present as a divalent anion in the crystal structure, and Ha is at least one element selected from the group consisting of F, Cl, Br, and I, and
   the composition formula satisfies relationships of 5 ≤ a ≤ 7, 4 ≤ b ≤ 6, and 1 < c ≤ 2.
[6] The sulfide solid electrolyte powder according to any one of [1] to [5], having a composite elastic modulus of 5 GPa to 20 GPa.
[7] An electrode mixture including the sulfide solid electrolyte powder according to any one of [1] to [6].

### ADVANTAGEOUS EFFECTS OF INVENTION

According to the present invention, it is possible to obtain a sulfide solid electrolyte powder capable of maintaining good interface contact with an active material even at a low restraining pressure when formed into an all-solid-state battery. Therefore, an all-solid-state battery can be produced without using a large restraining jig, and an all-solid-state battery in which a decrease in battery properties during repeated charging and discharging cycles is prevented is obtained.

### BRIEF DESCRIPTION OF DRAWINGS

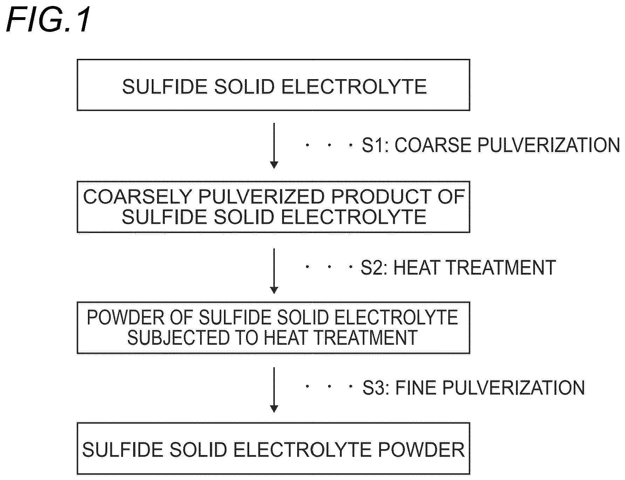

FIG. 1 is a flow diagram showing a method for producing a sulfide solid electrolyte powder according to the present embodiment.

### DESCRIPTION OF EMBODIMENTS

Hereinafter, the present invention is described in detail, but the present invention is not limited to the following embodiment, and can be freely modified and implemented without departing from the gist of the present invention. In addition, "to" indicating a numerical range is used to include numerical values written before and after it as a lower limit value and an upper limit value. In the present description, "mass%" and "ppm by mass" have the same meanings as "wt%" and "ppm by weight", respectively.

### <<Sulfide Solid Electrolyte Powder>>

A sulfide solid electrolyte powder according to the present embodiment includes a crystal phase, and the crystal phase has an argyrodite crystal structure. In the sulfide solid electrolyte powder, a value represented by [(strain value - 0.001)/specific surface area (m²/g)] × 100 satisfies 0.010 to 0.070.

Here, the strain value means disturbance in the crystal structure.

Specifically, a state where average coordinates of each atom in the crystal structure are constant but there is a distribution in each coordinate is referred to as the disturbance in the crystal structure, and is quantified by a strain value. The present inventors have found that, by increasing the disturbance in the sulfide solid electrolyte powder, it is possible to prevent a decrease in battery properties due to a volume change of an active material caused by expansion and contraction during charging and discharging.

The reason for this is not clear, but by having the disturbance in the crystal structure, the coordinates of each atom in the crystal structure in the sulfide solid electrolyte powder are likely to be shifted in accordance with the volume change of the active material due to the charge and discharge. As a result, it is considered that good interface contact between the active material and the sulfide solid electrolyte powder can be maintained.

It can be said that the coordinates of each atom are likely to be shifted due to such disturbance in the crystal structure, so that the volume change of the active material is absorbed, that is, an elastic deformation region is expanded.

The disturbance in the crystal structure in the sulfide solid electrolyte powder can be quantified as a strain value by structural analysis on a powder X-ray diffraction (XRD) pattern, and the higher the strain value, the larger the disturbance in the crystal structure.

Specifically, the strain value is obtained by analyzing an XRD pattern using a Williamson-Hall method.

The strain value of the sulfide solid electrolyte powder according to the present embodiment is preferably large from the viewpoint of maintaining good interface contact. It is found that in the case where a specific surface area is increased by pulverizing the sulfide solid electrolyte and reducing a particle diameter of the sulfide solid electrolyte powder, the specific surface area and the strain value show a positive correlation. That is, as the specific surface area increases, the strain value increases.

On the other hand, an ion conductivity tends to decrease as the specific surface area of the sulfide solid electrolyte powder increases.

Therefore, in order to obtain good battery properties, it is not sufficient to simply increase the strain value.

Therefore, as a result of further studies by the present inventors, it has been found that, if the strain value of the sulfide solid electrolyte powder can be made larger than that in the related art with respect to the same specific surface area, the problem in the present invention can be solved while maintaining a good ion conductivity. As a result of still further studies, it has been found that in the case where the strain value and the specific surface area satisfy a certain relationship, the problem in the present invention can be solved and good battery properties can be realized, and actually, a sulfide solid electrolyte satisfying such properties has been obtained.

Specifically, the value represented by an expression [(strain value - 0.001)/specific surface area (m²/g)] × 100 is set to 0.010 to 0.070.

Here, the value of 0.001 in the above expression is an approximate value of the strain value of a sulfide solid electrolyte before being pulverized into a powder, and is a value conceived by the studies of the present inventors.

In order to increase the strain value of the sulfide solid electrolyte powder, when a pulverization method in the related art is adopted to tighten pulverization conditions or to perform pulverization for a long time, the specific surface area is too large due to excessive pulverization. As a result, the ion conductivity decreases, and good battery properties cannot be realized. In this case, the value represented by [(strain value - 0.001)/specific surface area (m²/g)] × 100 is less than 0.010.

In contrast, in the present invention, it is conceived that coarse pulverization, a heat treatment, and a wet pulverization method using a bead mill, to be described later, are sequentially adopted for the sulfide solid electrolyte. Accordingly, it has been found that the strain value of the obtained sulfide solid electrolyte powder can be increased even when an increase width of the specific surface area by pulverization is smaller than that in the related art, that is, even when the pulverization does not proceed more than that in the related art.

The value represented by [(strain value - 0.001)/specific surface area (m²/g)] × 100 of the sulfide solid electrolyte powder according to the present embodiment is 0.010 to 0.070, preferably 0.015 to 0.060, and more preferably 0.020 to 0.050. Here, the above value is preferably 0.015 or more, and more preferably 0.020 or more, from the viewpoint of more effectively obtaining the effects of the present invention.

On the other hand, the above value is not particularly limited in upper limit, and the upper limit is set to 0.070 or less from the viewpoint of maintaining the crystal structure and maintaining the ion conductivity. From the above viewpoint, the value is preferably 0.060 or less, and more preferably 0.050 or less.

The strain value of the sulfide solid electrolyte powder is not particularly limited as long as the value represented by [(strain value - 0.001)/specific surface area (m²/g)] × 100 is within a range of 0.010 to 0.070. The strain value is, for example, preferably 0.0020 to 0.0080, more preferably 0.0030 to 0.0070, and still more preferably 0.0040 to 0.0060. Here, the strain value is preferably 0.0020 or more, more preferably 0.0030 or more, and still more preferably 0.0040 or more, from the viewpoint of maintaining better interface contact with the active material even at a low restraining pressure. The strain value is preferably 0.0080 or less, more preferably 0.0070 or less, and still more preferably 0.0060 or less, from the viewpoint of maintaining a high ion conductivity.

The specific surface area of the sulfide solid electrolyte powder is not particularly limited as long as the value represented by [(strain value - 0.001)/specific surface area (m²/g)] × 100 is within a range of 0.010 to 0.070. The specific surface area is, for example, preferably 4 m²/g to 35 m²/g, more preferably 7 m²/g to 30 m²/g, and still more preferably 13 m²/g to 20 m²/g. Here, the specific surface area is preferably 4 m²/g or more, more preferably 7 m²/g or more, and still more preferably 13 m²/g or more, from the viewpoint of forming more interfaces with the active material and further improving the battery properties. The specific surface area is preferably 35 m²/g or less, more preferably 30 m²/g or less, and still more preferably 20 m²/g or less, from the viewpoint of preventing a decrease in ion conductivity due to miniaturization.

The specific surface area in the present description is a value obtained by using a nitrogen adsorption BET multipoint method, which is referred to as a BET specific surface area.

The sulfide solid electrolyte powder according to the present embodiment includes a crystal phase having an argyrodite crystal structure. Here, the argyrodite crystal structure is a crystal structure of a group of compounds derived from a mineral represented by a composition formula Ag₈GeS₆. The sulfide solid electrolyte powder according to the present embodiment is not limited to having the above crystal structures, and some elements may be substituted with other elements.

In the case where the sulfide solid electrolyte powder according to the present embodiment has an argyrodite crystal structure, it is preferable to contain a halogen (Ha) element as a constituent element, and it is more preferable to contain two or more kinds of Ha elements. As the Ha element, it is more preferable to contain at least one kind of element selected from the group consisting of Cl, Br, and I, and it is still more preferable to contain two or more kinds of elements selected from the above group.

The argyrodite crystal structure in the present embodiment still more preferably contains at least one of Cl and Br, and even more preferably contains Cl and Br, as the Ha element.

In the case where the argyrodite crystal structure contains two or more kinds of halogen elements, one of them is preferably Br, and a content ratio of Br to the halogen element is more preferably 0.1 to 0.9, still more preferably 0.2 to 0.8, and even more preferably 0.3 to 0.7.

Here, the content ratio of Br is preferably 0.1 or more, more preferably 0.2 or more, and still more preferably 0.3 or more, from the viewpoint of improving the ion conductivity. The content ratio of Br is preferably 0.9 or less, more preferably 0.8 or less, and still more preferably 0.7 or less, from the viewpoint of preventing a decrease in ion conductivity.

The argyrodite crystal structure preferably has the above structure, and it is preferable that the composition formula is represented by LiₐMZ_{b}Ha_{c} and relationships of 5 ≤ a ≤ 7, 4 ≤ b ≤ 6, and 1 < c ≤ 2 are satisfied.

In the composition formula, M represents at least one kind of element selected from Na, K, and elements present as a divalent to quinquevalent cation in the crystal structure. Z represents at least one kind of element selected from elements present as a divalent anion in the crystal structure. Ha represents a halogen element.

Here, among M in the composition formula, specific examples of the element present as the divalent to quinquevalent cation include B, Mg, Al, Si, P, Ca, Ti, V, Fe, Zn, Ga, Sr, Y, Zr, Nb, Mo, Sn, Sb, Ba, Ta, W, and Bi.

It is preferable that M mainly contains P from the viewpoint of an oxidation-reduction potential of the element. Specifically, M mainly containing P means that a ratio of a content of P (at%) to a content of M (atoms%, hereinafter referred to as "at%") in the argyrodite crystal structure is 0.6 or more, and the above ratio is preferably 0.6 to 1. The above ratio is more preferably 0.7 or more, and still more preferably 0.8 or more. The above ratio is not particularly limited in upper limit, and may be 1, 0.98 or less, 0.97 or less, or 0.95 or less.

M may contain, in addition to P, at least one kind of element selected from Na, K, Mg, and Ca.

As a raw material for forming the argyrodite crystal structure, a mixture containing lithium sulfide (Li₂S) may be suitably used. Here, it is widely known that lithium sulfide is produced from lithium hydroxide (LiOH), and lithium hydroxide may contain at least one kind of element (hereinafter, also referred to as "R") selected from the group consisting of Na, K, Mg, and Ca as impurities. That is, M may contain R derived from impurities of such a raw material.

In order to reduce a content of R derived from impurities, a high purity raw material may be required, and there is a concern that a production cost increases.

A ratio of the content (at%) of R to the content of M (at%) is preferably 0.001 to 0.4, and more preferably 0.01 to 0.3. Here, the above ratio is preferably 0.001 or more, more preferably 0.01 or more, and still more preferably 0.02 or more, from the viewpoint of reducing the production cost. The above ratio is preferably 0.4 or less, and more preferably 0.3 or less, from the viewpoint of preventing a decrease in lithium ion conductivity.

The above range does not in any way preclude intentionally incorporating R into the argyrodite crystal structure or, in this case, incorporating R in an amount greater than the above ratio.

For example, in the composition formula showing the argyrodite crystal structure, in the case where O is contained as Z, it is preferable that at least one kind of element selected from Al, Ca, Mg, Na, and K is contained as R, and the element is present at the site of Li as Mⁿ⁺. Here, Mⁿ⁺ represents a monovalent to trivalent cation. In this case, Al is more preferably contained as R. In this case, the content of R (at%) to the content (at%) of M may be greater than the above range.

Z in the composition formula is at least one kind of element selected from elements present as a divalent anion in the crystal structure, and examples thereof include S, O, Se, and Te.

Among them, it is preferable that Z mainly contains S from the viewpoint of the lithium ion conductivity. Z mainly containing S specifically means that a ratio of a content (at%) of S to a content (at%) of Z in the crystal structure is 0.6 or more, and the above ratio is preferably 0.6 to 1. The above ratio is more preferably 0.7 or more, and still more preferably 0.8 or more. The above ratio is not particularly limited in upper limit, and may be 1, 0.98 or less, 0.95 or less, or 0.9 or less.

In the case where S is contained as Z, a part of S may be substituted with Ha, BH₄, CN, or the like in addition to the above O, Se, and Te.

The halogen element represented by Ha in the composition formula is preferably at least one kind of element selected from the group consisting of F, Cl, Br, and I. From the viewpoint of ease of forming the argyrodite crystal structure, Ha preferably contains at least one of Cl and Br, more preferably contains Br, and is still more preferably elemental Br or a mixture of Cl and Br. From the viewpoint of further improving the lithium ion conductivity, Ha is preferably a mixture of Cl and Br.

In the case where Ha contains Cl and Br, a ratio represented by (x/y) is preferably 0.1 to 10, more preferably 0.3 to 3, and still more preferably 0.5 to 1.6, in which x (at%) is a content of Cl and y (at%) is a content of Br in the argyrodite crystal structure. Here, the above ratio is preferably 0.1 or more, more preferably 0.3 or more, still more preferably 0.5 or more, and is preferably 10 or less, more preferably 3 or less, still more preferably 1.6 or less.

When the ratio represented by (x/y) satisfies the above range, an interaction between lithium ions and halide ions is weakened, and the lithium ion conductivity is likely to be improved. This is considered to be due to the influence of a mixed anion effect, which weakens the interaction between cations and anions by mixing bromide ions having an ion radius larger than that of chloride ions. In addition, cycle properties of a lithium ion secondary battery are likely to be improved.

In the case where Ha contains Cl and Br, when ratios of contents (at%) of the elements constituting the argyrodite crystal structure are represented by LiₐMZ_{b}Cl_{c1}Br_{c2}, c1 is preferably 0.1 to 1.5, more preferably 0.3 to 1.4, and still more preferably 0.5 to 1.3. Here, c1 is preferably 0.1 or more, more preferably 0.3 or more, still more preferably 0.5 or more, and is preferably 1.5 or less, more preferably 1.4 or less, still more preferably 1.3 or less.

The c2 is preferably 0.1 to 1.9, more preferably 0.3 to 1.6, and still more preferably 0.5 to 1.4. Here, c2 is preferably 0.1 or more, more preferably 0.3 or more, still more preferably 0.5 or more, and is preferably 1.9 or less, more preferably 1.6 or less, still more preferably 1.4 or less.

When c1 and c2 each satisfy the above ranges, a stable argyrodite crystal can be obtained while an abundance ratio of halide ions in the crystal is optimized and the interaction between anions and lithium ions in the crystal structure is reduced. Accordingly, the lithium ion conductivity of the sulfide solid electrolyte powder is likely to be improved. When c1 and c2 satisfy the above ranges, the cycle properties of the lithium ion secondary battery are likely to be improved.

Note that, a, b, and (c1+c2) in the composition formula represented by LiₐMZ_{b}Cl_{c1}Br_{c2} preferably satisfy relationships same as those of a, b, and c to be described later.

A ratio of each element in the composition formula represented by LiₐMZ_{b}Ha_{c} preferably satisfies the relationships of 5 ≤ a ≤ 7, 4 ≤ b ≤ 6, and 1 < c ≤ 2, more preferably satisfies the relationships of 5 < a < 7, 4 < b < 6, and 1 < c < 2, still more preferably satisfies the relationships of 5.1 < a < 6.3, 4 < b < 5.3, and 1.4 ≤ c ≤ 1.9, and even more preferably satisfies the relationships of 5.2 < a < 6.2, 4.1 < b < 5.2, and 1.5 ≤ c ≤ 1.8.

That is, a is preferably 5 or more, more preferably more than 5, still more preferably more than 5.1, even more preferably more than 5.2, and is preferably 7 or less, more preferably less than 7, still more preferably less than 6.3, even more preferably less than 6.2.

b is preferably 4 or more, more preferably more than 4, still more preferably more than 4.1, and is preferably 6 or less, more preferably less than 6, still more preferably less than 5.3, even more preferably less than 5.2.

c is preferably more than 1, more preferably 1.3 or more, still more preferably 1.4 or more, even more preferably 1.5 or more, and is preferably 2 or less, more preferably less than 2, still more preferably 1.9 or less, even more preferably 1.8 or less.

The argyrodite crystal structure is, for example, a cubic crystal (for example, F-43m), or may be a hexagonal crystal, a tetragonal crystal, an orthorhombic crystal, or a monoclinic crystal, which has reduced symmetry, or a triclinic crystal having further reduced symmetry.

The sulfide solid electrolyte powder according to the present embodiment includes a crystal phase, and a content ratio (crystallinity) of the crystal phase is preferably 50 mass% to 100 mass%, more preferably 60 mass% to 99 mass%, still more preferably 65 mass% to 95 mass%, and even more preferably 70 mass% to 90 mass%.

Here, the content ratio is preferably 50 mass% or more, more preferably 60 mass% or more, and still more preferably 65 mass% or more, from the viewpoint of ensuring lithium ion conductivity. On the other hand, the content ratio may be 100 mass%, that is, the sulfide solid electrolyte powder may consist of only the crystal phase, but from the viewpoint of obtaining the effect of expanding the elastic deformation region by the presence of an amorphous phase, the content ratio is preferably 99 mass% or less, more preferably 95 mass% or less, and still more preferably 90 mass% or less.

The crystal phase in the present embodiment may have a crystal phase having a crystal structure other than argyrodite, but a ratio of the crystal phase having the argyrodite crystal structure with respect to the entire crystal phase is preferably 50 mass% or more, more preferably 80 mass% or more, and is preferably as high as possible.

Examples of the crystal phase that may be included in addition to the argyrodite crystal structure include a crystal phase having a crystal structure containing a Li element, a P element, and a S element called an LPS-based crystal structure such as Li₇P₃S₁₁, a crystal phase having a crystal structure containing a Li element, a Ge element, a P element, and a S element called an LGPS-based crystal structure such as Li₁₀GeP₂S₁₂, a crystal phase having a thio-LISICON crystal structure, and a crystal phase containing an oxide.

The sulfide solid electrolyte powder according to the present embodiment may include an amorphous phase. The presence of the amorphous phase is preferred since it expands the elastic deformation region. A composition of the amorphous phase is generally the same as the composition of the crystal phase. Details of the elastic deformation region is to be described later.

A content ratio of the amorphous phase in the sulfide solid electrolyte powder is preferably 5 mass% or more, more preferably 5 mass% to 50 mass%, still more preferably 10 mass% to 40 mass%, and even more preferably 15 mass% to 30 mass%. Here, the content ratio is preferably 5 mass% or more, more preferably 10 mass% or more, and still more preferably 15 mass% or more, from the viewpoint of further exhibiting the effect of the presence of the amorphous phase. The content ratio is preferably 50 mass% or less, more preferably 40 mass% or less, and still more preferably 30 mass% or less, from the viewpoint of maintaining the ion conductivity.

The crystal structure of the crystal phase and the content ratio thereof in the sulfide solid electrolyte powder are determined by analyzing an XRD pattern. The content ratio of the amorphous phase is determined from the remainder obtained by analyzing the XRD pattern and subtracting it from the ratio of all the crystal phases.

The sulfide solid electrolyte powder according to the present embodiment has an elastic modulus larger than that of those having a small strain value. Specifically, a pellet having a relative density of 90% is prepared using the sulfide solid electrolyte powder, and a composite elastic modulus measured by a nano-indentation test using a spherical indenter having an indenter tip radius of 100 µm can be, for example, 5 GPa or more.

In general, a crystalline solid electrolyte has a small elastic deformation region and cannot absorb a volume change of an active material due to charging and discharging. Therefore, it is necessary to prepare an all-solid-state battery with a high restraining pressure and maintain a contact interface between the solid electrolyte and the active material. However, even when using a high restraining pressure, repeated charge and discharge cycles gradually result in plastic deformation of the solid electrolyte material, and the cycle properties decrease.

In contrast, it is considered that, in the sulfide solid electrolyte powder according to the present embodiment, the elastic deformation region is expanded due to the disturbance in the crystal structure, that is, the strain. In addition, it is considered that the elastic deformation region is further expanded by including the amorphous phase. As a result, even when the all-solid-state battery is prepared at a low restraining pressure, the contact interface between the solid electrolyte and the active material can be maintained, good battery properties can be obtained, and a decrease in cycle properties can also be prevented.

The composite elastic modulus in the present embodiment is preferably 5 GPa or more, more preferably 5 GPa to 20 GPa, still more preferably 7 GPa to 18 GPa, and even more preferably 10 GPa to 15 GPa. Here, from the viewpoint of obtaining better battery properties, the composite elastic modulus is preferably 20 GPa or less, more preferably 18 GPa or less, still more preferably 15 GPa or less, and is preferably as low as possible. On the other hand, practically, the composite elastic modulus may be 5 GPa or more, 7 GPa or more, or 10 GPa or more.

Since a particle diameter D50 of the sulfide solid electrolyte powder according to the present embodiment correlates with the BET specific surface area, the particle diameter D50 is adjusted to obtain a suitable BET specific surface area. For example, in the case where the BET specific surface area is 10 m²/g to 30 m²/g, the particle diameter D50 is about 0.4 µm or more and less than 1.0 µm.

In the present description, the particle diameter D50 is a volume-based cumulative 50% diameter determined by a laser diffraction particle size distribution analyzer. That is, a particle size distribution is measured by a laser diffraction and scattering method, a cumulative curve is determined by setting a total volume of the sulfide solid electrolyte to 100%, and the particle diameter D50 represents a particle diameter at a point on the cumulative curve where the cumulative volume is 50%.

The BET specific surface area and the particle diameter D50 of the sulfide solid electrolyte powder can be adjusted by the pulverization method and the pulverization conditions when pulverizing the sulfide solid electrolyte to obtain the sulfide solid electrolyte powder.

Examples of the pulverization method of the sulfide solid electrolyte include pulverization using a bead mill. Accordingly, it is found that the strain value can be increased to a desired level without excessively reducing the particle diameter D50.

A crystallite diameter in the argyrodite crystal structure in the sulfide solid electrolyte powder according to the present embodiment is preferably 100 Å to 3000 Å, more preferably 200 Å to 2500 Å, and still more preferably 300 Å to 2000 Å. Here the crystallite diameter is preferably 100 Å or more, more preferably 200 Å or more, and still more preferably 300 Å or more, from the viewpoint of the ion conductivity. Based on that the crystallite diameter inevitably decreases as the particle diameter decreases, the crystallite diameter is preferably 3000 Å or less, more preferably 2500 Å or less, and still more preferably 2000 Å or less from the viewpoint of realizing the particle diameter D50 and the BET specific surface area desired for the sulfide solid electrolyte powder.

The crystallite diameter in the present description is a value determined together with the strain value when an XRD pattern of the sulfide solid electrolyte powder is analyzed using the Williamson-Hall method.

The lithium ion conductivity of the sulfide solid electrolyte powder according to the present embodiment is preferably 0.1 mS/cm or more, more preferably 0.5 mS/cm or more, still more preferably 1.0 mS/cm or more, particularly preferably 1.5 mS/cm or more, and is preferably as high as possible, from the viewpoint of obtaining good battery properties when used in a lithium ion secondary battery.

The upper limit of the lithium ion conductivity is not particularly limited, and is, for example, 15 mS/cm.

The lithium ion conductivity in the present description is determined using a value obtained using an AC impedance measurement device on a measurement sample prepared as a powder compact by applying a pressure of 380 MPa to the sulfide solid electrolyte powder. Here, measurement conditions in the AC impedance measurement are a measurement frequency of 100 Hz to 1 MHz, a measurement voltage of 100 mV, and a measurement temperature of 25°C.

The sulfide solid electrolyte powder according to the present embodiment is suitably used in an all-solid-state lithium ion secondary battery by being treated using a well-known method as desired, and then applying a pressure with a positive electrode active material or a negative electrode active material to form a positive electrode layer or a negative electrode layer, which is an electrode mixture, or if necessary, also applying a pressure with an additive such as a binder to form a solid electrolyte layer.

### <Method for Producing Sulfide Solid Electrolyte Powder>

As shown in FIG. 1, a method for producing the sulfide solid electrolyte powder according to the present embodiment includes the following steps in order.
Step 1: a step of preparing a sulfide solid electrolyte
Step 2: a step S1 of coarsely pulverizing the sulfide solid electrolyte to obtain a coarsely pulverized product of the sulfide solid electrolyte
Step 3: a step S2 of obtaining a powder by subjecting the coarsely pulverized product to a heat treatment while preventing aggregation
Step 4: a step S3 of finely pulverizing the powder after the heat treatment to obtain a sulfide solid electrolyte powder

Hereinafter, the steps are described in order.

### · Step 1

The step 1 is a step of preparing a sulfide solid electrolyte. The sulfide solid electrolyte may be synthesized or may be commercially available. In the case of synthesizing the sulfide solid electrolyte, a well-known method can be adopted, and a melting method is preferred from the viewpoint of obtaining a sulfide solid electrolyte having a large strain value.

In the case of synthesizing the sulfide solid electrolyte, for example, it is preferable to include a step of obtaining a raw material mixture, a step of reacting the raw material mixture, and a step of performing crystallization or amorphization.

The reaction in the step of reacting the raw material mixture may be a heating reaction or a mechanochemical reaction. In the case of obtaining the sulfide solid electrolyte by the heating reaction, the step of performing crystallization or amorphization may not be included separately.

In the case of the melting method, the sulfide solid electrolyte is obtained by preparing a mixture of raw materials as necessary, then heating and melting the mixture, followed by cooling and solidification.

The raw materials vary depending on a desired composition of the crystal phase or the amorphous phase, and, for example, raw materials containing Li, P, S, and Ha can be used.

As the raw materials, well-known materials can be adopted.

As conditions in the step of mixing and reacting the raw materials, well-known conditions can be adopted. For example, in the case of the melting method, a well-known heating temperature during the heating and melting, and a well-known time, atmosphere, pressure, dew point, and the like during the heating and melting or the cooling and solidification can be adopted. Alternatively, an intermediate obtained by reacting the raw materials before melting may be used to perform melt synthesis therefrom.

### · Step 2

The step 2 is a step of coarsely pulverizing the sulfide solid electrolyte obtained in the step 1 to obtain a coarsely pulverized product of the sulfide solid electrolyte (step S1).

By performing coarse pulverization before performing the heat treatment in the step 3 to be described later, the particle diameter is made small to some extent. Then, through the subsequent step 3 of performing a heat treatment while preventing aggregation, a sulfide solid electrolyte powder having a high ion conductivity can be obtained. As a result, a load of the subsequent pulverization step can be reduced, a decrease in ion conductivity can be prevented, and a step load can also be reduced.

The coarse pulverization method is not particularly limited as long as the value represented by [(strain value - 0.001)/specific surface area (m²/g)] × 100 of the sulfide solid electrolyte powder finally obtained is a desired value, and a method other than wet pulverization is preferred. Examples thereof include coarse pulverization using a cutter mill (cut mill). The coarse powder may be obtained by a method of directly obtaining the coarse powder from the melt of the sulfide solid electrolyte.

The cutter mill is a method in which a rotor to which a cutter or the like is attached is rotated at a high speed, and the raw material is pulverized by a shearing force or a cutting force.

By performing the coarse pulverization using a cutter mill, the value represented by [(strain value - 0.001)/specific surface area (m²/g)] × 100 of the sulfide solid electrolyte powder after the heat treatment while preventing aggregation in the subsequent step 3 and the fine pulverization in the subsequent step 4 can be increased, and a sulfide solid electrolyte powder maintaining good interface contact with the active material even at a low restraining pressure can be obtained.

As a coarse pulverization method other than that using the cutter mill, for example, a planetary ball mill, a jet mill, or the like may be adopted, and in this case, dry pulverization without using a dispersion medium is preferred.

The coarse pulverization is preferably performed such that the particle diameter D50 of the coarsely pulverized product of the sulfide solid electrolyte is 5 µm to 300 µm, and the particle diameter D50 is more preferably 10 µm to 200 µm, and still more preferably 10 µm to 150 µm. Here, the particle diameter D50 of the coarsely pulverized product is preferably 300 µm or less, more preferably 200 µm or less, and still more preferably 150 µm or less, from the viewpoint of reducing the load in the fine pulverization step in the step 4. The particle diameter D50 is preferably 5 µm or more, and more preferably 10 µm or more, from the viewpoint of powder handling.

After coarsely pulverizing the sulfide solid electrolyte, classification (sieving or the like) may be performed as necessary to obtain the coarsely pulverized product of the sulfide solid electrolyte.

### · Step 3

The step 3 is a step of subjecting the coarsely pulverized product of the sulfide solid electrolyte obtained in the step 2 to a heat treatment while preventing aggregation to obtain a powder (step S2).

As a result of improving homogeneity and stabilizing a quality as a solid electrolyte by performing the heat treatment, a high ion conductivity can be maintained even when fine pulverization is performed in the subsequent step 4.

A heating temperature in the heat treatment is, for example, preferably 200°C to 600°C, more preferably 350°C to 500°C, still more preferably 380°C to 460°C, and particularly preferably 400°C to 450°C. Here, the heating temperature is preferably 200°C or higher, more preferably 350°C or higher, still more preferably 380°C or higher, and particularly preferably 400°C or higher, from the viewpoint of the homogenization of the particles and the stabilization of the quality. The heating temperature is preferably 600°C or lower, more preferably 500°C or lower, still more preferably 460°C or lower, and particularly preferably 450°C or lower, from the viewpoint of preventing sintering of the particles.

A heating time for the heat treatment is, for example, preferably 10 minutes to 10 hours, more preferably 30 minutes to 9.5 hours, still more preferably 45 minutes to 9 hours, and particularly preferably 1 hour to 9 hours. Here, the time for the heat treatment is preferably 10 minutes or longer, more preferably 30 minutes or longer, still more preferably 45 minutes or longer, and particularly preferably 1 hour or longer, from the viewpoint of the homogenization of the particles and the stabilization of the quality. The time for the heat treatment is preferably 10 hours or shorter, more preferably 9.5 hours or shorter, and still more preferably 9 hours or shorter, from the viewpoint of the production cost.

An atmosphere in the heat treatment is preferably an inert atmosphere. Examples of the inert atmosphere include a nitrogen gas atmosphere, an argon gas atmosphere, and a helium gas atmosphere.

Here, in order to perform the heat treatment while preventing the aggregation of the coarsely pulverized product, it is preferable to perform the heat treatment while circulating the inert gas. A flow rate of the inert gas is, for example, preferably 1 L/min to 1000 L/min, more preferably 5 L/min to 500 L/min, and still more preferably 10 L/min to 100 L/min. Here, the flow rate is preferably 1 L/min or more, more preferably 5 L/min or more, and still more preferably 10 L/min or more, from the viewpoint of suitably preventing the aggregation of the coarsely pulverized product. The flow rate is preferably 1000 L/min or less, more preferably 500 L/min or less, and still more preferably 100 L/min or less, from the viewpoint of preventing scattering of the coarsely pulverized product.

The aggregation can also be prevented by performing the heat treatment in an atmosphere having a SO₂ concentration of, for example, 1 ppm to 1000 ppm by volume in addition to the inert gas.

Further, the aggregation can also be prevented by forming a container during the heat treatment into a shape having a low height and a wide bottom.

A dew point during the heat treatment is preferably -20°C or lower, and the lower limit thereof is not particularly limited, and is usually about -80°C. An oxygen concentration is preferably 1000 ppm by volume or less.

When cooling is performed after the heat treatment, the aggregation of the coarsely pulverized product can also be prevented by circulating the inert gas. At this time, the flow rate of the inert gas is, for example, preferably 1 L/min to 1000 L/min, more preferably 5 L/min to 500 L/min, and still more preferably 10 L/min to 100 L/min. Here, the flow rate is preferably 1 L/min or more, more preferably 5 L/min or more, and still more preferably 10 L/min or more, from the viewpoint of suitably preventing the aggregation of the coarsely pulverized product. The flow rate is preferably 1000 L/min or less, more preferably 500 L/min or less, and still more preferably 100 L/min or less, from the viewpoint of preventing scattering of the coarsely pulverized product.

### · Step 4

The step 4 is a step of finely pulverizing the powder after the heat treatment obtained in the step 3 to obtain a sulfide solid electrolyte powder (step S3).

The fine pulverization is preferably performed using a bead mill. The bead mill is a method in which the material is ground by rotating hard beads in a cylindrical container to prepare a fine powder. By performing the fine pulverization using such a method, the strain value can be increased without excessive pulverization, and the value represented by [(strain value - 0.001)/specific surface area (m²/g)] × 100 can be increased.

That is, for example, when the specific surface area of the sulfide solid electrolyte powder in the related art is to be 15 m²/g by pulverization, the strain value is 0.0010 or more and less than 0.0020, but the strain value of the sulfide solid electrolyte powder according to the present embodiment can be 0.0020 or more. In addition, for example, when a sulfide solid electrolyte powder having a strain value of about 0.0025 is to be obtained by pulverization, the specific surface area thereof needs to be 30 m²/g or more, but the sulfide solid electrolyte powder according to the present embodiment can have a specific surface area of about 10 m²/g to 15 m²/g.

As a vessel of the bead mill used for the fine pulverization, a well-known vessel can be used, and examples thereof include a vessel made of alumina (Al₂O₃), a vessel made of zirconia (ZrO₂), and a vessel made of zirconia-reinforced alumina.

Examples of the kind of fine pulverization beads include alumina beads, zirconia beads, and glass beads, and zirconia beads and alumina beads are preferred from the viewpoint of abrasion resistance.

In the case of using zirconia beads, yttria-stabilized zirconia is preferred from the viewpoint of improving fracture toughness.

In the case of using alumina beads, high purity alumina beads are preferred from the viewpoint of improving the fracture toughness.

The high purity alumina beads preferably satisfy at least one of a purity of 99.9% or more and a Vickers hardness of 1800 HV10 or more, and more preferably satisfy both. The use of the high purity alumina beads as described above is preferred since the abrasion resistance of the beads can be improved and contamination derived from the beads can be prevented.

The purity of the alumina beads is preferably 99.9% or more, more preferably 99.93% or more, still more preferably 99.95% or more, particularly preferably 99.99% or more, and is preferably as high as possible.

The Vickers hardness of the alumina beads is preferably 1800 HV10 to 2300 HV10. Here, the Vickers hardness is preferably 1800 HV10 or more, more preferably 1900 HV10 or more, still more preferably 2000 HV10 or more, and particularly preferably 2100 HV10 or more, from the viewpoint of the abrasion resistance. The Vickers hardness is preferably 2300 HV10 or less from the viewpoint of preventing abrasion of a pulverization chamber (vessel) and the rotor.

The purity of the alumina beads can be measured by measuring an amount of impurities by ICP emission spectroscopy and subtracting a total amount of impurities from 100%.

The Vickers hardness of the alumina beads can be measured by pressing a pyramidal indenter made of diamond against a test piece, observing the resulting indentation using a microscope, and measuring a length of a diagonal line.

Although a fine powder having a small particle diameter D50 can be obtained even when dry pulverization or a pulverization method other than that using a bead mill is adopted as the fine pulverization method, wet pulverization using a bead mill is preferred from the viewpoint of easily realizing the value represented by [(strain value - 0.001)/specific surface area (m²/g)] × 100 in a range of 0.010 to 0.070 without excessively increasing the BET specific surface area with respect to the strain value.

In the wet pulverization method, the coarsely pulverized product of the sulfide solid electrolyte may be dispersed or dissolved in a dispersion medium to form a slurry and pulverized. In addition to the solvent for the sulfide solid electrolyte, an additive such as a dispersant may be further added to the slurry.

The dispersion medium is not particularly limited, and a non-aqueous solvent is preferred since the sulfide solid electrolyte has a property of easily reacting with moisture and deteriorating.

The kind of the non-aqueous organic solvent is not particularly limited, and examples thereof include a hydrocarbon-based solvent, an organic solvent containing a hydroxy group, an organic solvent containing an ether group, an organic solvent containing a carbonyl group, an organic solvent containing an ester group, an organic solvent containing an amino group, an organic solvent containing a formyl group, an organic solvent containing a carboxy group, an organic solvent containing an amide group, an organic solvent containing a benzene ring, an organic solvent containing a mercapto group, an organic solvent containing a thioether group, an organic solvent containing a thioester group, an organic solvent containing a disulfide group, and a halogenated alkyl.

Examples of the hydrocarbon-based solvent include cyclohexane, heptane, octane, and toluene, and cyclohexane, heptane, and octane are preferred from the viewpoint of a low saturated moisture concentration. From the viewpoint of adjusting the moisture concentration, it is also preferable to use a mixed solvent in which these hydrocarbon-based solvents are mixed with toluene, dibutyl ether, or the like.

From the viewpoint of preventing a decrease in lithium ion conductivity due to a reaction between the sulfide solid electrolyte and water during the fine pulverization of the coarsely pulverized product of the sulfide solid electrolyte, the moisture concentration in the dispersion medium is preferably low. The moisture concentration in the dispersion medium may be, for example, 170 ppm by mass or less, 150 ppm by mass or less, 120 ppm by mass or less, or 100 ppm by mass or less.

In the case of using a dispersant as the additive, examples thereof include an ether compound, an ester compound, and a nitrile compound.

A content of the coarsely pulverized product of the sulfide solid electrolyte in the slurry is preferably 5 mass% to 35 mass%, more preferably 10 mass% to 33 mass%, and still more preferably 20 mass% to 30 mass%. Here, the content is preferably 5 mass% or more, more preferably 10 mass% or more, still more preferably 20 mass% or more, and is preferably 35 mass% or less, more preferably 33 mass% or less, still more preferably 30 mass% or less, from the viewpoint of pulverization efficiency and ease of handling of the slurry.

A solid content concentration in the slurry is preferably 5 mass% to 35 mass%, more preferably 10 mass% to 33 mass%, and still more preferably 20 mass% to 30 mass%. Here, the solid content concentration is preferably 5 mass% or more, more preferably 10 mass% or more, still more preferably 20 mass% or more, and is preferably 35 mass% or less, more preferably 33 mass% or less, still more preferably 30 mass% or less, from the viewpoint of the pulverization efficiency and the ease of handling of the slurry.

In the case of performing the fine pulverization using a bead mill, beads for fine pulverization have a diameter of preferably 0.1 mm to 1 mm, more preferably 0.2 mm to 0.8 mm, and still more preferably 0.3 mm to 0.5 mm. Here, the diameter is preferably 0.1 mm or more, more preferably 0.2 mm or more, and still more preferably 0.3 mm or more, from the viewpoint of obtaining a sulfide solid electrolyte powder having a good lithium ion conductivity. The diameter is preferably 1 mm or less, more preferably 0.8 mm or less, and still more preferably 0.5 mm or less, from the viewpoint of obtaining a finely pulverized product having a desired small particle diameter.

The sulfide solid electrolyte powder obtained in the step 4 may be further subjected to a drying step. Even when the dispersion medium and the additive remain in the sulfide solid electrolyte powder, they can be removed by drying.

As a drying method, a well-known method can be adopted, and for example, a hot plate, a drying furnace, an electric furnace, or the like can be used.

A temperature in the drying step is not particularly limited, and is, for example, 50°C to 300°C. In the case where the fine pulverization is performed using a dispersion medium, the drying may be performed by heating at a temperature equal to or higher than a boiling point of the dispersion medium.

A time in the drying step is also not particularly limited, and examples thereof include 10 minutes to 24 hours.

The drying step may be performed under a reduced pressure, for example, an absolute pressure of 50 kPa or less.

### <Electrode Mixture>

The sulfide solid electrolyte powder according to the present embodiment may be used in an electrode mixture. That is, an electrode mixture according to the present embodiment contains the sulfide solid electrolyte powder described in the above <Sulfide Solid Electrolyte Powder>, and a preferred embodiment of the sulfide solid electrolyte powder is the same as the preferred embodiment described in the above <Sulfide Solid Electrolyte Powder>.

The electrode mixture according to the present embodiment is preferably used in a lithium ion secondary battery, and is formed by applying a pressure to both a sulfide solid electrolyte powder and an active material. That is, in the case where the electrode mixture according to the present embodiment is a negative electrode mixture, at least a negative electrode active material and the sulfide solid electrolyte powder are contained, and in the case where the electrode mixture is a positive electrode mixture, at least a positive electrode active material and the sulfide solid electrolyte powder are contained.

As the active material contained in the electrode mixture, a well-known active material can be used.

For example, the positive electrode active material is not particularly limited as long as it can reversibly occlude and release lithium ions, desorb and insert (intercalate) the lithium ions, or dope and dedope counter anions of the lithium ions. Specific examples thereof include lithium cobalt oxide, lithium nickel oxide, lithium manganese oxide, lithium nickel manganese oxide, a composite metal oxide, and a polyaniline olivine positive electrode.

The negative electrode active material is also not particularly limited as long as it can reversibly occlude and release lithium ions, desorb and insert (intercalate) the lithium ions, or dope and dedope counter anions of the lithium ions. Specific examples of the negative electrode active material include metal lithium, carbon-based materials such as graphite, hard carbon, and soft carbon, metals capable of forming an alloy with lithium such as aluminum, silicon, and tin, amorphous oxides such as silicon oxide and tin oxide, and lithium titanate.

### <Solid Electrolyte Layer>

The sulfide solid electrolyte powder according to the present embodiment may be used in a solid electrolyte layer. That is, a solid electrolyte layer according to the present embodiment contains the sulfide solid electrolyte powder described in the above <Sulfide Solid Electrolyte Powder>, and a preferred embodiment of the sulfide solid electrolyte powder is the same as the preferred embodiment described in the above <Sulfide Solid Electrolyte Powder>.

The solid electrolyte layer according to the present embodiment is preferably used in a lithium ion secondary battery.

The solid electrolyte layer according to the present embodiment may contain a binder as necessary.

A content of the sulfide solid electrolyte powder in the solid electrolyte layer according to the present embodiment is not particularly limited, and may be appropriately determined according to performance of a target battery. For example, the content of the sulfide solid electrolyte powder with respect to the entire solid electrolyte layer is preferably 80 mass% or more, and more preferably 90 mass% or more.

Examples of the binder that can be contained in the solid electrolyte layer include a butadiene rubber (BR), an acrylate butadiene rubber (ABR), a styrene butadiene rubber (SBR), a polyvinylidene difluoride (PVdF), and a polytetrafluoroethylene (PTFE). A content of the binder in the solid electrolyte layer may be the same as that in the related art.

A thickness of the solid electrolyte layer is not particularly limited, and may be appropriately determined according to the performance of the target battery. For example, the thickness is preferably 10 µm to 50 µm, and more preferably 15 µm to 20 µm. Here, the thickness is preferably 10 µm or more, and more preferably 15 µm or more, from the viewpoint of obtaining a solid electrolyte layer that has increased mechanical strength, that is resistant to a stress such as vibration and bending, and that has high reliability. The thickness is preferably 50 µm or less, and more preferably 20 µm or less, from the viewpoint of improving the ion conductivity between the positive and negative electrodes and increasing an energy density of the battery.

A method for forming the solid electrolyte layer is not particularly limited. For example, the solid electrolyte layer can be formed by dispersing or dissolving components constituting the solid electrolyte layer in a liquid medium to form a slurry, applying the slurry in the form of a layer (sheet), drying the slurry, and optionally pressing. If necessary, the binder may be removed by heating. The thickness of the solid electrolyte layer can be easily adjusted by adjusting an application amount or the like of the slurry.

Instead of the wet molding as described above, the solid electrolyte layer may be formed by pressing the solid electrolyte powder or the like by a dry method on a surface of a target (a positive electrode, a negative electrode, or the like) on which the solid electrolyte layer is to be formed. Alternatively, a solid electrolyte layer may be formed on another base material, and may be transferred to the surface of the target on which the solid electrolyte layer is to be formed. From the viewpoint that a strong solid electrolyte layer can be industrially stably formed on the surface of the target on which the solid electrolyte layer is to be formed, the solid electrolyte layer is preferably formed on the surface of the target by wet molding using a liquid medium.

### <Lithium Ion Secondary Battery>

The sulfide solid electrolyte powder according to the present embodiment may be used in a lithium ion secondary battery. That is, a lithium ion secondary battery according to the present embodiment contains the sulfide solid electrolyte described in the above <Sulfide Solid Electrolyte Powder>, and a preferred embodiment thereof is the same.

The lithium ion secondary battery according to the present embodiment includes a solid electrolyte layer, a positive electrode layer, and a negative electrode layer. The sulfide solid electrolyte powder may be contained in one or more of the solid electrolyte layer, the positive electrode layer, and the negative electrode layer, may be contained in two or more thereof, or may be contained in all thereof.

As configurations of the solid electrolyte layer, the positive electrode layer, and the negative electrode layer other than the sulfide solid electrolyte powder, well-known configurations can be adopted.

### EXAMPLES

Hereinafter, the present invention is specifically described with reference to Examples, but the present invention is not limited thereto. Examples 1 to 8 are Inventive Examples, and Example 9 is a Comparative Example.

### <Test Example>

### (Example 1)

Under a dry nitrogen atmosphere, a lithium sulfide powder (purity: 99.98%, manufactured by Sigma Corporation), a phosphorus pentasulfide powder (purity: 99%, manufactured by Sigma Corporation), a lithium chloride powder (purity: 99.99%, manufactured by Sigma Corporation), and a lithium bromide powder (purity: 99.995%, manufactured by Sigma Corporation) were weighed so as to have a composition of Li_{5.4}PS_{4.4}Cl_{0.8}Br_{0.8}, were charged into a heat-resistant container, and were melted at 750°C for 1 hour in an atmosphere of a gas containing a sulfur element, followed by cooling to room temperature at 5°C/sec to obtain a sulfide solid electrolyte. The gas containing a sulfur element was a mixed gas containing a sulfur gas (Sx (x = 2 to 8)) and a nitrogen gas (N₂ gas) as a carrier gas, and a content of the sulfur gas in the mixed gas was 10 vol%.

The obtained sulfide solid electrolyte was coarsely pulverized using a cutter mill to adjust the average particle diameter (D50) to 10 µm to 20 µm, and then subjected to 100 µm mesh pass to obtain a coarsely pulverized product of the sulfide solid electrolyte.

Next, 200 g of the coarsely pulverized product obtained above was charged into a carbon-made container having a capacity of 1.0 L, which was placed in an electric furnace in which a heating area and a cooling area were separated. In the heating area, the coarsely pulverized product was heated at 430°C for 15 minutes while flowing a N₂ gas at 10 L/min. Subsequently, the coarsely pulverized product was moved to the cooling area at room temperature, and cooled while flowing a N₂ gas at 20 L/min to obtain a non-aggregated powder.

The powder obtained above was added to 385 g of dehydrated dibutyl ether to obtain a slurry (slurry solid content concentration: 30 mass%). A zirconia-made sample container (vessel) was charged with 550 g of the slurry and 468 g of zirconia beads having a diameter of 0.3 mm (YTZ-0.3, manufactured by Nikkato Corporation), and the container was set in LABSTAR Mini LMZ015 manufactured by Ashizawa Finetech Ltd., followed by wet pulverization using a bead mill.

Thereafter, the resultant was heated and dried at a temperature equal to or higher than the boiling point of the solvent under a nitrogen atmosphere to obtain a sulfide solid electrolyte powder.

### (Examples 2 to 5)

Each sulfide solid electrolyte powder was obtained by the same method as in Example 1 except that a peripheral speed and a pulverization time among wet pulverization conditions using the bead mill were appropriately changed such that the specific surface area of the obtained sulfide solid electrolyte powder was the value shown in Table 1.

### (Examples 6 and 7)

Each sulfide solid electrolyte powder was obtained by the same method as in Example 1 except that high purity Al₂O₃ beads (diameter: 0.3 mm, purity: 99.99% or more, TB-03 manufactured by TAIMEI CHEMICALS Co., Ltd.) were used instead of the zirconia beads during the wet pulverization using the bead mill, and the peripheral speed and the pulverization time among the wet pulverization conditions using the bead mill were appropriately changed such that the specific surface area of the obtained sulfide solid electrolyte powder was the value shown in Table 1.

### (Example 8)

A sulfide solid electrolyte powder was obtained by the same method as in Example 1 except that raw materials were mixed so as to have a composition of Li_{5.4}PS_{4.4}Cl_{1.6} instead of a composition of Li_{5.4}PS_{4.4}Cl_{0.8}Br_{0.8} under a dry nitrogen atmosphere, and the peripheral speed and the pulverization time among the wet pulverization conditions using the bead mill were appropriately changed such that the specific surface area of the obtained sulfide solid electrolyte powder was the value shown in Table 1.

### (Example 9)

Under a dry nitrogen atmosphere, a lithium sulfide powder (purity: 99.98%, manufactured by Sigma Corporation), a phosphorus pentasulfide powder (purity: 99%, manufactured by Sigma Corporation), a lithium chloride powder (purity: 99.99%, manufactured by Sigma Corporation), and a lithium bromide powder (purity: 99.995%, manufactured by Sigma Corporation) were weighed so as to have a composition of Li_{5.4}PS_{4.4}Cl_{0.8}Br_{0.8}, were mixed in a mortar, and were then further mixed using a planetary ball mill (LP-M2 manufactured by ITO Corporation) to obtain a sulfide precursor.

Next, the sulfide precursor powder was fired by performing a heat treatment at 400°C for 5 hours under a dry nitrogen gas atmosphere, and then cooled to room temperature at 1°C/sec to obtain a coarsely pulverized product of the sulfide solid electrolyte.

The subsequent procedures were the same as the method in Example 1 except that the peripheral speed and the pulverization time among the wet pulverization conditions using the bead mill were appropriately changed such that the specific surface area of the obtained sulfide solid electrolyte powder was the value shown in Table 1, so as to obtain a sulfide solid electrolyte powder.

### <Evaluation>

### [Lithium Ion Conductivity]

The sulfide solid electrolyte powder was formed into a powder compact at a pressure of 380 MPa and used as a measurement sample.

Next, the lithium ion conductivity was measured by using an AC impedance measurement device (potentiostat/galvanostat VSP, manufactured by Bio-Logic Sciences Instruments) under the following conditions.
Measurement frequency: 100 Hz to 1 MHz
Measurement voltage: 100 mV
Measurement temperature: 25°C

The lithium ion conductivity at 25°C was determined based on the obtained Nyquist plot. The results are shown in Table 1.

### [Crystal Structure, Crystallinity, Strain Value, and Crystallite Diameter]

The sulfide solid electrolyte powder was subjected to X-ray diffraction (XRD) measurement, and it has been found that each of the obtained sulfide solid electrolytes includes a crystal phase having an argyrodite crystal structure.

In the XRD measurement, a Si powder was mixed as an internal standard for the sulfide solid electrolyte powder in each example, and X-ray diffraction measurement (SmartLab manufactured by Rigaku Corporation) using an air non-exposure holder was used. For the obtained XRD pattern, the crystal structure was refined by the Rietveld method using RIETAN-FP software. In the analysis, a structure having the smallest Rwp value was determined as the crystal structure in each example. The Rwp value is a reliability factor R-weighted pattern (Rwp), which is a general standard for the entire analysis range in fitting for structural refinement using Rietveld analysis. The smaller the Rwp value, the better, and in this analysis, the smallest Rwp values were all less than 10%. Accordingly, the crystallinity (mass%) of the argyrodite crystal in the sulfide solid electrolyte powder, that is, the ratio of the crystal phase to the total of the ratio of the crystal phase and the amorphous phase was determined.

The results are shown in Table 1.

The results obtained by the above analysis were analyzed using the Williamson-Hall method, and the strain value and the crystallite diameter were determined.

A peak value (20) and a full width at half maximum (β) were extracted and converted into 2sinθ/λ1 and βcosθ/λ1, respectively. Here, λ1 used is 1.5405, which is wavelength/Å of a CuKα 1 ray.

Only peaks derived from the argyrodite crystal structure were plotted with the obtained 2sinθ/γ1 and βcosθ/λ1 as the X axis and the Y axis, respectively. A slope value of a linear approximation line of the obtained plot was defined as the strain value, and the reciprocal of an intercept value with respect to the Y axis was defined as the crystallite diameter to obtain each value.

The results are shown in Table 1.

The conditions in the XRD measurement were as follows.

Ray source: CuKα ray (λ = 1.5418 Å (CuKα 1 ray wavelength: 1.5405 Å, CuKα 2 ray wavelength: 1.5443 Å, intensity ratio: Kα2/Kα 1 = 0.497)), tube voltage: 45 kV, tube current: 200 mA, scanning angle: 10° to 120°, scanning speed: 5°/min, number of steps: 0.01°/step.

### [BET Specific Surface Area]

The BET specific surface area (specific surface area, m²/g) was measured by using a nitrogen adsorption BET multipoint method. The results are shown in Table 1.

### [Strain Value Parameter]

Based on the strain value and the BET specific surface area obtained above, a value represented by [(strain value - 0.001)/specific surface area (m²/g)] × 100 was determined. The results are shown in Table 1.

### [Evaluation of Battery]

The obtained sulfide solid electrolyte powder, LiNi_{1/3}Co_{1/3}Mn_{1/3}O₂ particles coated with lithium niobate having an average particle diameter of 7 µm (positive electrode active material), a conductive auxiliary agent and a binder were mixed in a ratio of 1.1 g: 5.0 g: 0.1 g: 0.6 g, and were stirred in a butyl butyrate solution to obtain a slurry. The slurry was applied onto an Al foil as a current collector by using a blade method using an applicator, and vacuum drying was performed at 80°C for 4 hours to obtain a positive electrode sheet. The obtained sheet was punched with a die having a diameter of 10 mm to obtain a positive electrode mixture.

On the other hand, a powder compact (diameter: 10 mm, thickness: 1 mm) of the obtained sulfide solid electrolyte powder was prepared, the positive electrode mixture was placed on the powder compact and pressed at 500 MPa, and then an Li-In alloy was bonded to the counter electrode. Then, the obtained product was restrained at a restraining pressure of 10 MPa or 100 MPa to prepare a lithium ion secondary battery (half cell). The half cell has a structure in which contents are not exposed to the air.

The obtained half cell was subjected to 5 cycles of charging and discharging in the range of 4.3 V to 2.5 V vs. Li⁺/Li in an environment of 25°C. The rate was 0.1 C for both charging and discharging.

In the sixth cycle, after charging to 4.3 V vs. Li⁺/Li at a rate of 0.1 C, discharging to 1.9 V vs. Li⁺/Li at a rate of 1 C was performed, and the discharge capacity at this time was determined.

The ratio of the discharge capacity of a half cell having a restraining pressure of 10 MPa to the discharge capacity of a half cell having a restraining pressure of 100 MPa was determined. The results are shown in Table 1, and in Table 1, the ratios of the discharge capacities are normalized. Specifically, the discharge capacity ratio of the result in Example 9 is normalized to 1.00. The larger the normalized discharge capacity ratio compared to Example 9, the better the interface contact with the active material can be maintained even when at a low restraining pressure.

### [Composite Elastic Modulus]

The composite elastic modulus of the sulfide solid electrolyte powder obtained in Example 1 was determined.

Specifically, a powder compact (pellet) having a diameter of 10 mm was molded using 0.1 g of the sulfide solid electrolyte powder. This power compact was prepared by applying a pressure such that the relative density was 90%, and the sample in Example 1 was molded by applying a pressure of 570 MPa.

The pellet was subjected to a nano-indentation test using a spherical indenter having an indenter tip radius of 100 µm.

As a result, it was found that the composite elastic modulus in Example 1 is 11 GPa. The samples were all treated in an atmosphere not exposed to the air, and the measurement was performed.

**[Table 1]**

| | Composition | Beads | Lithium ion conductivity (mS/cm) | BET specific surface area (m²/g) | Crystallinity (mass%) | Strain value (-) | [(Strain value - 0.001)/specific surface area (m²/g)] × 100 | Evaluation of Battery (Discharge capacity ratio) low restraining pressure/high restraining pressure | Crystallite diameter (Å) |
|---|---|---|---|---|---|---|---|---|---|
| Example 1 | Li_{5.4}PS_{4.4}Cl_{0.8}Br_{0.8} | ZrO₂ | 5.5 | 11.7 | 92 | 0.0040 | 0.026 | 1.10 | 1192 |
| Example 2 | Li_{5.4}PS_{4.4}Cl_{0.8}Br_{0.8} | ZrO₂ | 4.7 | 13.9 | 89 | 0.0039 | 0.021 | 1.11 | 963 |
| Example 3 | Li_{5.4}PS_{4.4}Cl_{0.8}Br_{0.8} | ZrO₂ | 4.0 | 15.4 | 80 | 0.0042 | 0.021 | 1.12 | 860 |
| Example 4 | Li_{5.4}PS_{4.4}Cl_{0.8}Br_{0.8} | ZrO₂ | 5.0 | 12.4 | 93 | 0.0037 | 0.021 | 1.11 | 943 |
| Example 5 | Li_{5.4}PS_{4.4}Cl_{0.8}Br_{0.8} | ZrO₂ | 3.7 | 13.6 | 71 | 0.0049 | 0.029 | 1.14 | 670 |
| Example 6 | Li_{5.4}PS_{4.4}Cl_{0.8}Br_{0.8} | High purity Al₂O₃ | 5.4 | 14.5 | 88 | 0.0040 | 0.021 | 1.08 | 1289 |
| Example 7 | Li_{5.4}PS_{4.4}Cl_{0.8}Br_{0.8} | High purity Al₂O₃ | 4.7 | 18.6 | 87 | 0.0042 | 0.017 | 1.07 | 866 |
| Example 8 | Li_{5.4}PS_{4.4}Cl_{1.6} | ZrO₂ | 2.1 | 15.0 | 70 | 0.0036 | 0.017 | 1.03 | 1570 |
| Example 9 | Li_{5.4}PS_{4.4}Cl_{0.8}Br_{0.8} | ZrO₂ | 3.7 | 13.3 | 96 | 0.0018 | 0.006 | 1.00 | 2280 |

As shown in Table 1, when the sulfide solid electrolyte is obtained by adopting the melting method, and the coarse pulverization using the cutter mill, the heat treatment while preventing the aggregation, and the fine pulverization using the bead mill are sequentially performed, the strain value can be increased without excessively reducing the particle diameter of the obtained sulfide solid electrolyte powder, and the value represented by [(strain value - 0.001)/specific surface area (m²/g)] × 100 can be increased. As a result, without decreasing the lithium ion conductivity of the sulfide solid electrolyte powder, even in the case where a lithium ion battery is assembled at a low restraining pressure of 10 MPa, good battery properties can be realized due to good interface contact even when the charging and discharging cycles are repeated.

Although the present invention has been described in detail with reference to specific embodiments, it is apparent to those skilled in the art that various changes and modifications can be made without departing from the spirit and scope of the present invention. The present application is based on a Japanese Patent Application (Japanese Patent Application No. 2023-110732) filed on July 5, 2023, the content of which is incorporated herein by reference.

## Claims

1. A sulfide solid electrolyte powder comprising a crystal phase,
wherein a value represented by [(strain value - 0.001)/specific surface area (m²/g)] × 100 is 0.010 to 0.070, and
the crystal phase comprises an argyrodite crystal structure.

2. The sulfide solid electrolyte powder according to claim 1, further comprising an amorphous phase,
wherein a content ratio of the amorphous phase is 5 mass% or more.

3. The sulfide solid electrolyte powder according to claim 1,
wherein the argyrodite crystal structure comprises two or more kinds of halogen elements as constituent elements.

4. The sulfide solid electrolyte powder according to claim 3,
wherein the halogen elements comprise Br, and
a content ratio of Br to the halogen elements is 0.1 to 0.9.

5. The sulfide solid electrolyte powder according to claim 1,
wherein the argyrodite crystal structure is represented by a composition formula LiₐMZ_{b}Ha_{c},
in the composition formula, M is at least one element selected from Na, K, and elements present as a divalent to quinquevalent cation in the crystal structure, Z is at least one element selected from elements present as a divalent anion in the crystal structure, and Ha is at least one element selected from the group consisting of F, Cl, Br, and I, and
the composition formula satisfies relationships of 5 ≤ a ≤ 7, 4 ≤ b ≤ 6, and 1 < c ≤ 2.

6. The sulfide solid electrolyte powder according to claim 1, having a composite elastic modulus of 5 GPa to 20 GPa.

7. An electrode mixture comprising the sulfide solid electrolyte powder according to any one of claims 1 to 6.
